# EUROPEAN PATENT APPLICATION

(11) **EP 2 136 296 A1**
(43) Date of publication of application: **23.12.2009**
(21) Application number: 07738133.3
(22) Date of filing: 09.03.2007
(51) Int. Cl.: G06F 11/20

(54) **INFORMATION PROCESSING APPARATUS AND DOMAIN DYNAMIC RECONFIGURATION PROCESSING METHOD**

(71) Applicant: Fujitsu Limited, Kawasaki-shi, Kanagawa 211-8588 (JP)
(72) Inventor: UCHIDA, Yasuhiko, Kawasaki-shi Kanagawa 211-8588 (JP)
(74) Representative: Fenlon, Christine Lesley
(86) International application number: PCT/JP2007/054648
(87) International publication number: WO 2008/111137

(57) **Abstract**

An information processing apparatus (1) comprises a pair of service processors (2, 3) and domains (100, 101) each including a plurality of system boards. In the information processing apparatus (1), if the operation -related service processor (2) that performs domain dynamic reconfiguration processing fails during execution of the domain dynamic reconfiguration processing, the stand-by related service processor (3) is changed to an operation-related one and takes over and executes the domain dynamic reconfiguration processing under execution.

## Description

### Technical Field

The present invention relates to an information processing apparatus and a domain dynamic reconfiguration processing method, and, more particularly to an information processing apparatus and a domain dynamic reconfiguration processing method for continuously executing, even when a service processor, for example, fails during domain dynamic reconfiguration processing, the domain dynamic reconfiguration processing.

### Background Art

In a large scale computer in which plural operating systems are operable, it is necessary to enable separation, combination, and replacement of components in a state in which the operating systems continue to operate. In other words, the systems need to continue operation regardless of which component fails. To enable component replacement and the like while the systems continue to operate, it is necessary to be able to complete execution of domain dynamic reconfiguration (DR) processing in any situations.

First, the domain dynamic reconfiguration processing is explained below. A set of components including a CPU, a memory, and an I/O device on a system is referred to as system board (SB). A set of one or more system boards on which an operating system (OS) can operate is referred to domain. Processing for reconfiguring a domain configurations, in a state in which the operating system (OS) is operating in the domain, by increasing or decreasing, the system boards (SB) configuring the domain, i.e., by incorporating the system boards in the domain or separating the system boards from the domain to reconfigure a domain configuration is referred to as domain dynamic reconfiguration processing. The domain dynamic reconfiguration processing can be executed in a service processor incorporated in the system.

The following Patent Document 1 describes a system control apparatus that prevents, with a duplex configuration, the stop of a computer system from being caused by the stop of the system control apparatus.
Patent Document 1: Japanese Patent Laid-Open No. 8-272753

### Disclosure of the Invention

### Problems to be Solved by the Invention

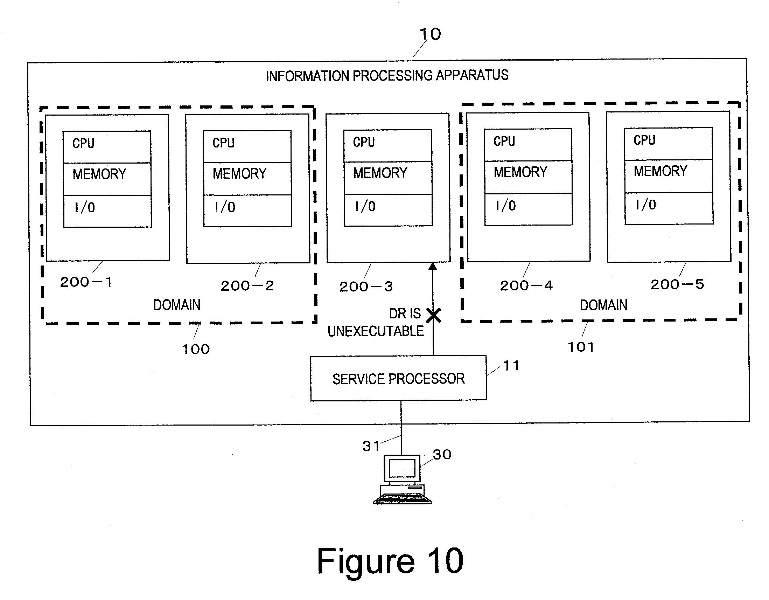

Figure 10 is a diagram illustrating a conventional system (information processing apparatus) that performs domain dynamic reconfiguration processing. In Figure 10, an information processing apparatus 10 includes a service processor 11 that performs the domain dynamic reconfiguration processing and domains 100 and 101. An SB 200-3 is a system board that is not incorporated in both the domains 100 and 101. The domain 100 includes a system board SB 200-1 and a system board SB 200-2. The domain 101 includes a system board SB 200-4 and a system board SB 200-5.

In each of the domains 100 and 101, one operating system is operable. The service processor 11 has a function of performing initial setting and power-on and power-off of a domain, a function of replacing a broken component, and a function of performing domain dynamic reconfiguration processing even during the operation of the OS. The dynamic reconfiguration processing for the domains executed by the service processor 11 is performed in SB units.

A user terminal 30 instructs, according to operation input of a user, the service processor 11 and a service processor connected by, for example, a LAN interface 31 to perform domain dynamic reconfiguration processing. For example, the service processor receives the instruction from the user terminal 30 and performs domain dynamic reconfiguration processing for incorporating the system board SB 200-3 in the domain 100.

For example, when components (a CPU, a memory, and an I/O) are replaced, the service processor 11 performs domain dynamic reconfiguration processing to thereby once remove an system board SB including the components to be replaced from a domain configuration and performs replacement of the components in a state in which the replacement does not affect the OS. As a result, it is possible to maintain the operation of the OS when the components are replaced.

However, in the conventional system illustrated in Figure 10, there is only one service processor. Service processors that perform domain dynamic reconfiguration processing are not redundantly configured. Therefore, when the service processor 11 fails or abnormality occurs, the domain dynamic reconfiguration processing and component replacement work cannot be performed at all. Therefore, it is necessary to restore the service processor 11 after turning off a power supply for the entire system including the OS. However, there is a problem in that, after the restoration of the service processor 11, domain dynamic reconfiguration processing executed by the service processor 11 before the failure cannot be continued.

For example, as illustrated in Figure 10, when a failure occurs in the service processor 11 during the domain dynamic reconfiguration processing for incorporating the system board SB 200-3 in the domain 100, the domain dynamic reconfiguration processing cannot be continued after the restoration of the service processor 11.

It is an object of the present invention to provide an information processing apparatus that continuously executes, even when a service processor, for example, fails during domain dynamic reconfiguration processing, the domain dynamic reconfiguration processing.

It is another object of the present invention to provide a domain dynamic reconfiguration processing method for continuously executing, even when a service processor, for example, fails during domain dynamic reconfiguration processing, the domain dynamic reconfiguration processing.

### Means for Solving the Problems

An information processing apparatus according to the present invention is an information processing apparatus including a domain configured by plural system boards and a pair of service processors. When one of the pair of service processors fails during the execution of domain dynamic reconfiguration processing for the domain, the other of the pair of service processors takes over and executes the domain dynamic reconfiguration processing under execution.

Preferably, in the information processing apparatus according to the present invention, each of the pair of service processors includes storing means in which a processing state of domain dynamic reconfiguration processing is stored, domain dynamic reconfiguration processing executing means for executing the domain dynamic reconfiguration processing while referring to the processing state of the domain dynamic reconfiguration processing stored in the storing means, and processing state synchronization processing means for storing the processing state of the domain dynamic reconfiguration processing in the storing means in synchronization with a processing state of domain dynamic reconfiguration processing executed by the other service processor.

Preferably, in the information processing apparatus according to the present invention, one of the pair of service processors is an operation system that is in an operation state and the other is a standby system that is in a standby state while the operation system is in the operation state. Each of the pair of service processors includes operation-system and standby-system switching means for switching, when the service processor is the standby system and the operation system fails during the execution of the domain dynamic reconfiguration processing, the service processor from the standby system to the operation system. The domain dynamic reconfiguration processing executing means included in the service processor switched to the operation system takes over and executes the domain dynamic reconfiguration processing executed by the failed operation system with reference to the processing state of the domain dynamic reconfiguration processing stored in the storing means.

Preferably, in the information processing apparatus according to the present invention, the processing state synchronization processing means stores, every time processing included in a processing state of the domain dynamic reconfiguration processing is started or completed, the processing state in the storing means in synchronization with a processing state of the domain dynamic reconfiguration processing executed by the other service processor.

Preferably, in the information processing apparatus according to the present invention, the domain dynamic reconfiguration processing is processing for separating any one of the plural system boards from the domain or processing for incorporating other system boards different from the plural system boards in the domain.

A domain dynamic reconfiguration processing method according to the present invention is a domain dynamic reconfiguration processing method in an information processing apparatus including a domain configured by plural system boards and a pair of service processors. When one of the pair of service processors fails during the execution of domain dynamic reconfiguration processing for the domain, the other of the pair of service processors takes over and executes the domain dynamic reconfiguration processing under execution.

Preferably, in the domain dynamic reconfiguration processing method according to the present invention, one of the pair of service processors is an operation system that is in an operation state and the other is a standby system that is in a standby state while the operation system is in the operation state. The operation system stores a processing state of the domain dynamic reconfiguration processing executed by the service processor in storing means. The standby system stores, every time the processing state of the domain dynamic reconfiguration processing stored in the storing means included in the operation system is updated, the processing state of the domain dynamic reconfiguration processing stored by the operation system in storing means in the service processor.

Preferably, in the domain dynamic reconfiguration processing method according to the present invention, when the operation system fails during the execution of the domain dynamic reconfiguration processing, the standby system switches the service processor from the standby system to the operation system. The service processor switched to the operation system takes over and executes the domain dynamic reconfiguration processing executed by the failed operation system with reference to the processing state of the domain dynamic reconfiguration processing stored in the storing means in the service processor.

Preferably, in the domain dynamic reconfiguration processing method according to the present invention, the operation system stores, every time processing included in the domain dynamic reconfiguration processing is started or completed, a processing state of the domain dynamic reconfiguration processing executed by the service processor in the storing means included in the service processor.

Preferably, in the domain dynamic reconfiguration processing method according to the present invention, the domain dynamic reconfiguration processing is processing for separating any one of the plural system boards from the domain or processing for incorporating other system boards different from the plural system boards in the domain.

### Advantages of the Invention

With the information processing apparatus and the domain dynamic reconfiguration processing method according to the present invention, when one of the pair of service processors included in the information processing apparatus fails during the execution of the domain dynamic reconfiguration processing, the other can take over and execute the domain dynamic reconfiguration processing executed by the other. Therefore, according to the present invention, it is possible to carry out replacement of a system board and replacement of a failed service processor or the like in a state in which the OS is operating. As a result, it is possible to substantially improve operation time of the entire system.

### Brief Description of the Drawings

Figure 1 is a diagram for explaining a principle of the present invention;
Figure 2 is a diagram illustrating an example of a system configuration according to the present invention;
Figure 3 is a diagram illustrating an example of a configuration of a service processor included in an information processing apparatus according to the present invention;
Figure 4 is a diagram for explaining a redundant configuration of service processors;
Figure 5A and 5B are diagrams for explaining processing for switching an operation system and a standby system in the information processing apparatus according to the present invention;
Figure 6A and 6B are diagram illustrating examples of domain dynamic reconfiguration processing flows;
Figure 7 is a diagram illustrating an example of a processing flow for registering a processing state of domain dynamic reconfiguration processing;
Figure 8A and 8B are flowcharts illustrating processing for synchronizing a processing state DB;
Figure 9A and 9B are diagrams illustrating examples of a processing flow for switching the operation system and the standby system; and
Figure 10 is a diagram illustrating a conventional system that performs domain dynamic reconfiguration processing.

### Best Mode for Carrying Out the Invention

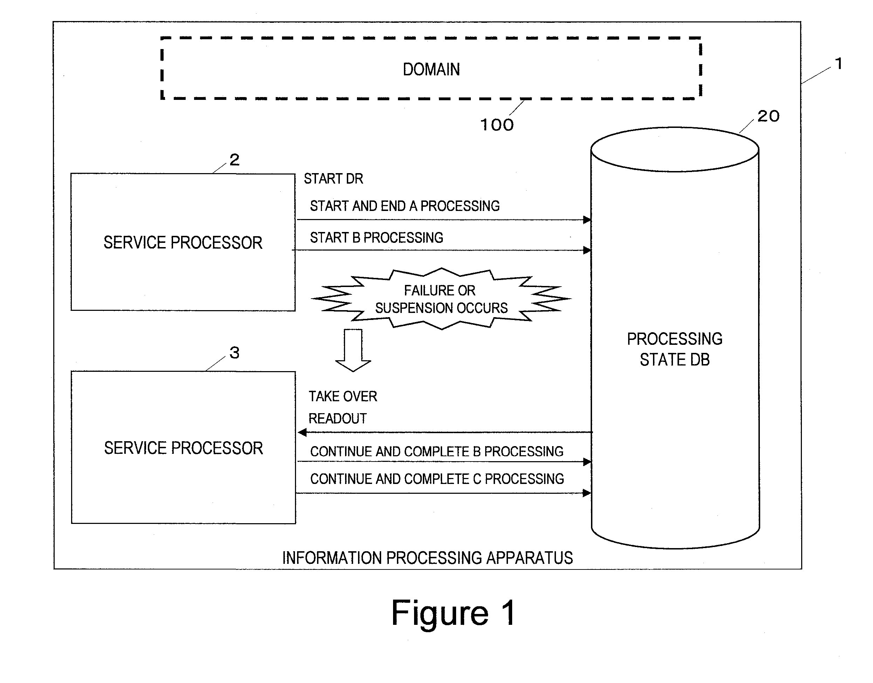

Figure 1 is a diagram for explaining a principle of the present invention. As illustrated in Figure 1, an information processing apparatus 1 according to the present invention includes a service processor 2 and a service processor 3 having the same configuration as the service processor 2. In Figure 1, reference numeral 100 denotes a domain. The service processor 3 is in a standby state while the service processor 2 is in an operation state. The information processing apparatus 1 according to the present invention includes the pair of service processors 2 and 3 to redundantly configure the service processors in this way. Therefore, even if one service processor fails, the other service processor on standby can take over domain dynamic reconfiguration processing.

As illustrated in Figure 1, in the information processing apparatus 1 according to the present invention, the pair of service processors 2 and 3 share a processing state of domain dynamic reconfiguration processing and domain configuration information. The domain configuration information is, for example, information indicating which a system board SB is incorporated in which domain. The sharing of a processing state of domain dynamic reconfiguration processing and domain configuration information means that a processing state of domain dynamic reconfiguration processing registered in processing state databases (processing state DBs) 20 included the service processors 2 and 3, respectively, and domain configuration information synchronize with each other (have the same content). This makes it possible to register and read out a processing state of domain dynamic reconfiguration processing necessary for taking over the domain dynamic reconfiguration processing.

In the information processing apparatus 1 according to the present invention illustrated in Figure 1, domain dynamic reconfiguration processing is divided into plural kinds of processing (e.g., A processing to C processing) and executed. A processing state is registered (stored) in the processing state DBs 20 for each of the kinds of processing such that the start and the completion of the processing can be determined. For example, as illustrated in Figure 1, the service processor 2 registers the start and the completion of the execution of the A processing included in the domain dynamic reconfiguration processing in the processing state DB 20 and registers the start of the B processing, which is the next processing of the A processing, in the processing state DB 20.

Since a processing state is registered in the processing state DBs 20 for each of the kinds of processing included in the domain dynamic reconfiguration processing, even if the domain dynamic reconfiguration processing executed by the service processor 2 is suspended, the service processor 3 on standby can grasp a processing progress state of the domain dynamic reconfiguration processing and resume the suspended processing by referring to the processing state DB 20.

For example, as illustrated in Figure 1, when the service processor 2 fails after starting the B processing and the processing is suspended, the service processor 3 on standby takes over domain dynamic reconfiguration processing as explained below. Specifically, the service processor 3 reads out the processing state DB 20, recognizes that the start of the B processing is registered, and continues to execute the B processing. When the execution of the B processing is completed, the service processor 3 registers the completion of the B processing in the processing state DB 20. Next, the service processor 3 starts the C processing, registers the start and the completion of the C processing in the processing state DB 20, and completes the domain dynamic reconfiguration processing.

With the information processing apparatus 1 according to the present invention, even if one service processor fails, another service processor can take over and execute domain dynamic reconfiguration processing and complete the domain dynamic reconfiguration processing.

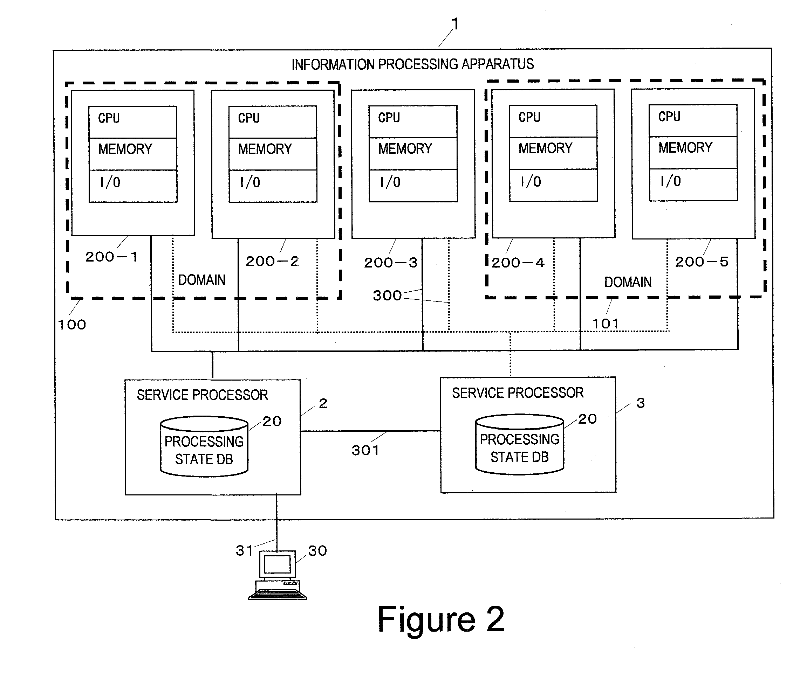

Figure 2 is a diagram illustrating an example of a system configuration according to the present invention. As illustrated in Figure 2, the information processing apparatus 1 according to the present invention includes the pair of service processors 2 and 3 that perform domain dynamic reconfiguration processing and domains 100 and 101. An SB 200-3 is an SB not incorporated in both the domains 100 and 101. The domain 100 includes an SB 200-1 and an SB 200-2. The domain 101 includes an SB 200-4 and an SB 200-5.

In each of the domains 100 and 101, one operating system (OS) can operate. The service processors 2 and 3 have a function of performing initial setting and power-on and power-off of a domain, a function of replacing a broken component, and a function of performing domain dynamic reconfiguration processing even while the OS is operating. Dynamic reconfiguration processing for domains executed by the service processors 2 and 3 is performed in SB units.

The service processors 2 and 3 have a function of switching the apparatus to an operation state or a standby state. When a service processor in the operation state is referred to as operation system and a service processor in the standby state is referred to as a standby system, while the operation system is in the operation state, the standby system is in the standby state and does not receive an instruction from the user terminal 30. When the operation system fails, the standby system is switched to the operation system, takes over processing executed by the failed operation system, and the failed operation system is switched to the standby system.

The user terminal 30 instructs, according to operation input of a user, the service processors 2 and 3 and a service processor connected by a LAN interface 31 to perform domain dynamic reconfiguration processing. For example, the service processor receives an instruction from the user terminal 30 and performs domain dynamic reconfiguration processing for incorporating the SB 200-3 in the domain 100.

The service processors 2 and 3 and the SBs are connected by a maintenance bus 300. The service processors 2 and 3 control the SBs and send instructions to a not-illustrated OS included in the information processing apparatus 1 through the maintenance bus 300. The control of the SBs indicates, for example, power-on and power-off of the SBs. The instruction to the OS means, for example, that the service processors 2 and 3 instruct the OS to incorporate a certain SB in a domain or separate a certain SB from the domain.

The service processors 2 and 3 are connected by a LAN interface 301 and can communicate with each other. For example, a service processor (an operation system) executing domain dynamic reconfiguration processing communicates a processing state of the domain dynamic reconfiguration processing to a service processor (a standby system) on standby through the LAN interface 301. The standby system monitors an operation state of the operation system through the LAN interface 301 and, when the operation system fails, switching the service processor to the operation system and instructs the operation system to switch to the standby system through the LAN interface 301.

The service processors 2 and 3 include the processing state DBs 20 that store, for each of kinds of processing included in domain dynamic reconfiguration processing, a processing state of the domain dynamic reconfiguration processing.

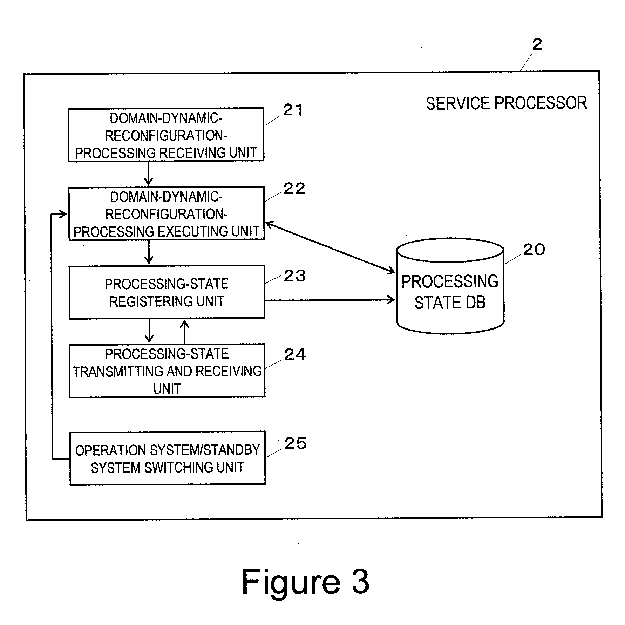

Figure 3 is a diagram illustrating an example of a configuration of a service processor included in the information processing apparatus according to the present invention. In this example, the service processor 2 is explained as an example. Since a configuration of the service processor 3 is the same as a configuration of the service processor 2, explanation of the configuration of the service processor 3 is omitted. The service processor 2 includes the processing state DB 20, a domain-dynamic-reconfiguration-processing receiving unit 21, a domain-dynamic-reconfiguration-processing executing unit 22, a processing-state registering unit 23, a processing-state transmitting and receiving unit 24, and an operation system/standby system switching unit 25. A processing state of domain dynamic reconfiguration processing is registered in the processing state DB 20. The domain-dynamic-reconfiguration-processing receiving unit 21 receives domain dynamic reconfiguration processing requested from the user terminal 30.

The domain-dynamic-reconfiguration-processing executing unit 22 executes domain dynamic reconfiguration processing while referring to a processing state of the domain dynamic reconfiguration processing stored in the processing state DB 20 explained later. When the domain-dynamic-reconfiguration-processing executing unit 22 receives, from the operation system/standby system switching unit 25 explained later, an instruction for taking over and executing domain dynamic reconfiguration processing executed by a failed operation system, the domain-dynamic-reconfiguration-processing executing unit 22 takes over and executes the domain dynamic reconfiguration processing executed by the failed operation system with reference to the processing state registered in the processing state DB 20.

The processing-state registering unit 23 registers (stores) a processing state of the domain dynamic reconfiguration processing by the domain-dynamic-reconfiguration-processing executing unit 22 in the processing state DB 20. The processing-state registering unit 23 registers, in the processing state DB 20, a processing state of domain dynamic reconfiguration processing executed by another service processor (in the example illustrated in Figure 2, the service processor 3), which is included in the information processing apparatus 1, and received by the processing-state transmitting and receiving unit 24 explained later from the other service processor.

The processing-state transmitting and receiving unit 24 transmits the processing state of the domain dynamic reconfiguration processing to another service processor included in the information processing apparatus 1 and causes the other service processor to register the processing state in the processing state DB 20 included therein. The processing-state transmitting and receiving unit 24 receives a processing state of domain dynamic reconfiguration processing transmitted from the other service processor. The received processing state is registered in the processing state DB 20 by the processing-state registering unit 23 described above. Consequently, pieces of information registered in the processing state DBs 20 included in the service processor and the other service processor synchronize with each other.

Specifically, the processing-state registering unit 23 and the processing-state transmitting and receiving unit 24 are processing state synchronization processing means for registering the processing state of the domain dynamic reconfiguration processing in the storing means in synchronization with the processing state of the domain dynamic reconfiguration processing executed by the other service processor.

The operation system/standby system switching unit 25 switches the service processor 2 or the other service processor to the operation system or the standby system. Specifically, when the service processor 2 is the operation system and, for example, fails, the operation system/standby system switching unit 25 switches the service processor (the service processor 2) to the operation system. When the service processor is the standby system, the operation system/standby system switching unit 25 monitors an operation state of the operation system via the LAN interface 301 illustrated in Figure 2. When the operation system fails, the operation system/standby system switching unit 25 switches the service processor to the operation system and instructs the domain-dynamic-reconfiguration-processing executing unit 22 to take over and execute domain dynamic reconfiguration processing executed by the failed operation system.

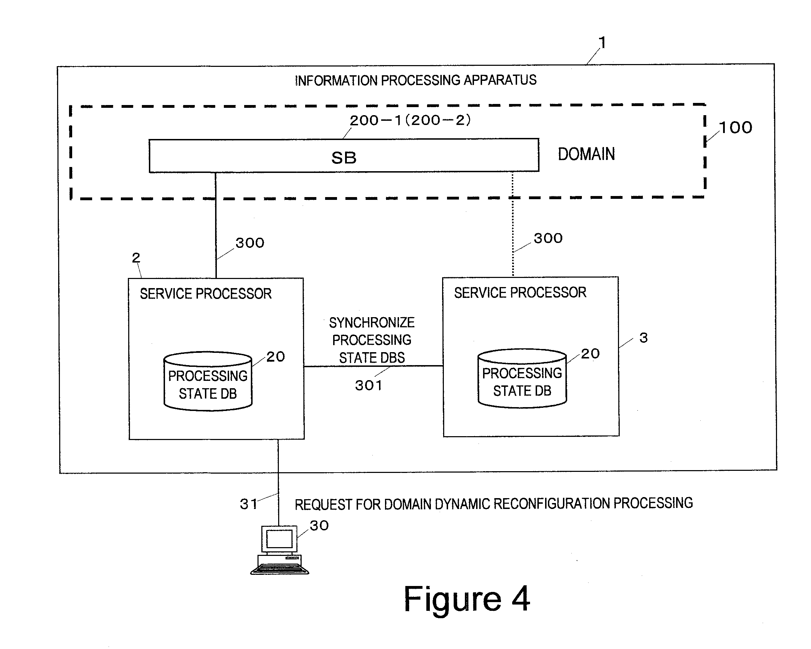

Figure 4 is a diagram for explaining a redundant configuration of service processors. As illustrated in Figure 4, the information processing apparatus 1 includes the pair of service processors 2 and 3 to thereby redundantly configure service processors. When each of the service processors is the operation system, the service processor receives a request for domain dynamic reconfiguration processing from the user apparatus 30 and sends a control instruction to and communicates with the SB 200-1 (200-2) and the OS through the maintenance bus 300. The processing states DBs 20 included in the service processors 2 and 3 are synchronized with each other through the LAN interface 301. In the information processing apparatus 1, maintenance buses 300 are also redundantly configured.

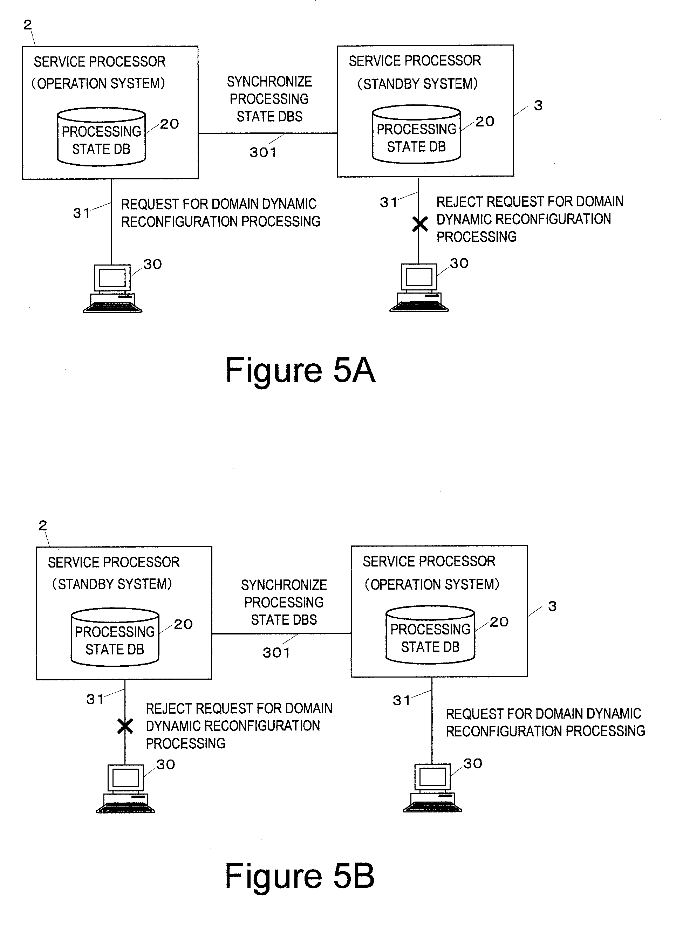

Figure 5A and 5B are diagrams for explaining processing for switching the operation system and the standby system in the information processing apparatus according to the present invention. As illustrated in Figure 5A, while the operation system (the service processor 2) receives a request for domain dynamic reconfiguration processing from the user terminal 30 and performs the domain dynamic reconfiguration processing, the standby system (the service processor 3) rejects the processing request from the user terminal 30. The operation system transmits a processing state to the standby system and causes the standby system to register the processing state in the processing state DB 20 of the standby system, whereby the processing state DBs 20 are synchronized between the operation system and the standby system.

When a failure occurs in the operation system illustrated in Figure 5A, as illustrated in Figure 5B, the operation system in which the failure occurs is switched to the standby system. The switched standby system rejects the processing request from the user terminal 30. On the other hand, as illustrated in Figure 5B, the service processor as the standby system in Figure 5A changes to the operation system to replace the failed operation system. The service processor that changes to the operation system takes over and executes domain dynamic reconfiguration processing executed by the failed operation system with reference to the processing state DB 20 in the service processor. Further, the service processor that changes to the operation system receives a request for new domain dynamic reconfiguration processing from the user terminal 30 and executes the domain dynamic reconfiguration processing. As explained with reference to Figure 5A, the processing state DBs 20 are synchronized between the operation system and the standby system.

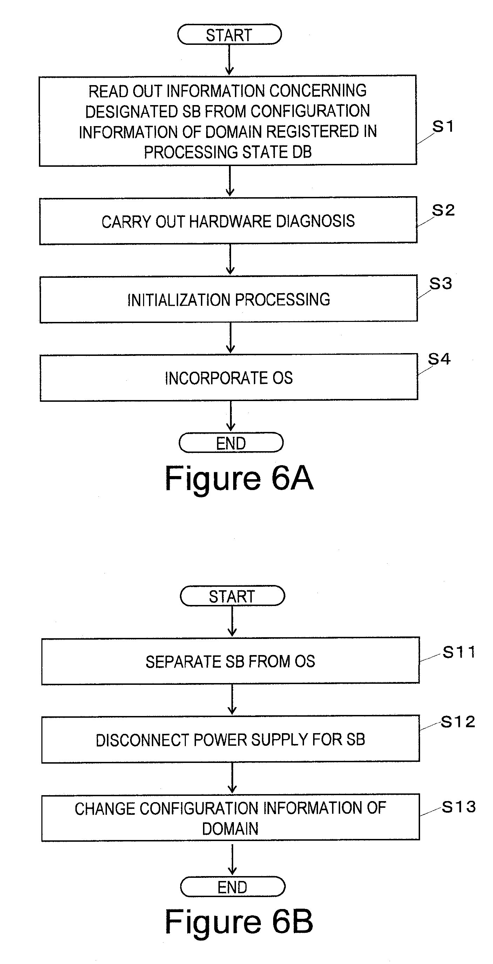

Figure 6A and 6B are diagrams illustrating examples of a domain dynamic reconfiguration processing flows. Domain dynamic reconfiguration processing includes two kinds of processing: processing for incorporating an SB in a domain and processing for separating an SB from the domain.

Figure 6A is a flowchart illustrating the processing for incorporating an SB in a domain. First, when the domain-dynamic-reconfiguration-processing executing unit 22 of the service processor 2 receives designation of a domain and an SB to be incorporated in the domain from the user terminal 30, the domain-dynamic-reconfiguration-processing executing unit 22 reads out information concerning the designated SB from configuration information of the domain registered in the processing state DB 20 (step S1). In step S1, the domain-dynamic-reconfiguration-processing executing unit 22 registers information designated from the user terminal in the processing state DB 20 as configuration information of the domain.

Next, the domain-dynamic-reconfiguration-processing executing unit 22 carries out hardware diagnosis (step S2). Specifically, the domain-dynamic-reconfiguration-processing executing unit 22 diagnoses whether a failure occurs in components (a CPU, a memory, and an I/O) in the SB to be incorporated.

The domain-dynamic-reconfiguration-processing executing unit 22 performs initialization processing (step S3). The initialization processing is hardware setting processing for incorporating an SB in a domain. The domain-dynamic-reconfiguration-processing executing unit 22 incorporates an OS (step S4). Specifically, the domain-dynamic-reconfiguration-processing executing unit 22 causes the OS to recognize the SB.

Figure 6B is a flowchart illustrating the processing for separating an SB from a domain. First, the domain-dynamic-reconfiguration-processing executing unit 22 separates an SB from an OS (step S11) and deletes the SB from a domain configuration.

Next, the domain-dynamic-reconfiguration-processing executing unit 22 disconnects a power supply for the separated SB and stops the SB (step S12). The domain-dynamic-reconfiguration-processing executing unit 22 reflects information concerning the separated SB on the processing state DB 20 and changes configuration information of a domain in the processing state DB 20 (step S13).

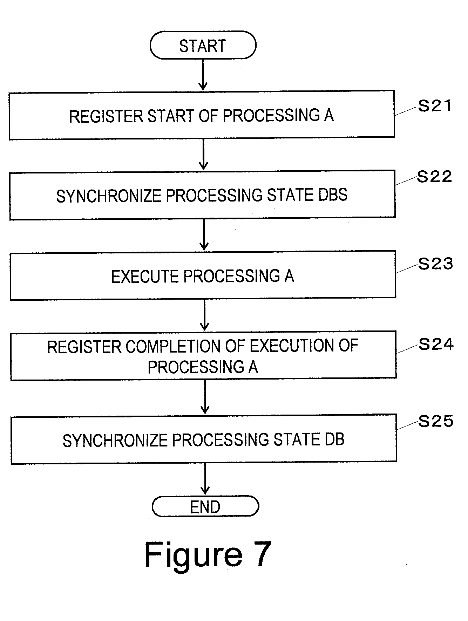

Figure 7 is a diagram illustrating an example of a processing flow for registering a processing state of domain dynamic reconfiguration processing. Processing A in Figure 7 is one of kinds of fragmented processing included in the domain dynamic reconfiguration processing. First, the processing-state registering unit 23 registers information indicating the start of the processing A in the processing state DB 20 before starting the processing A (step S21). Next, the processing-state transmitting and receiving unit 24 transmits the information registered in the processing state DB 20 to the standby system and causes standby system to reflect (register) the information of the processing state DB 20 thereof to thereby synchronize the processing state DBs 20 between the service processor and the standby system (step S22).

Next, the domain-dynamic-reconfiguration-processing executing unit 22 executes the processing A (step S23). The processing-state registering unit 23 registers, after the completion of the execution of the processing A, information indicating the completion of the execution of the processing A in the processing state DB 20 (step S24). The processing-state transmitting and receiving unit 24 transmits the information registered in the processing state DB 20 to the standby system and causes the standby system to reflect (register) the information on the processing state DB 20 thereof to thereby synchronize the processing state DBs 20 between the service processor and the standby system (step S25).

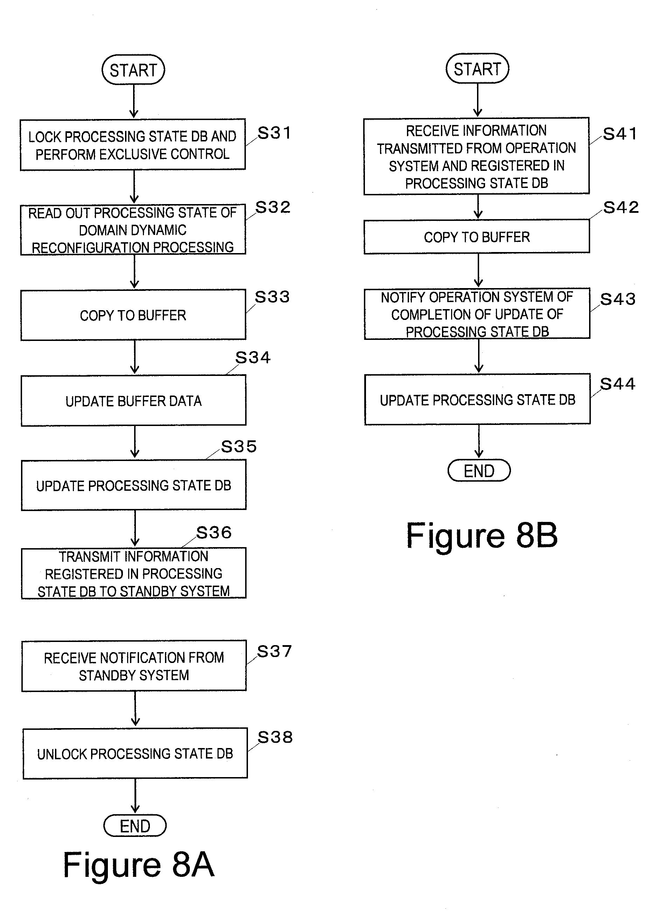

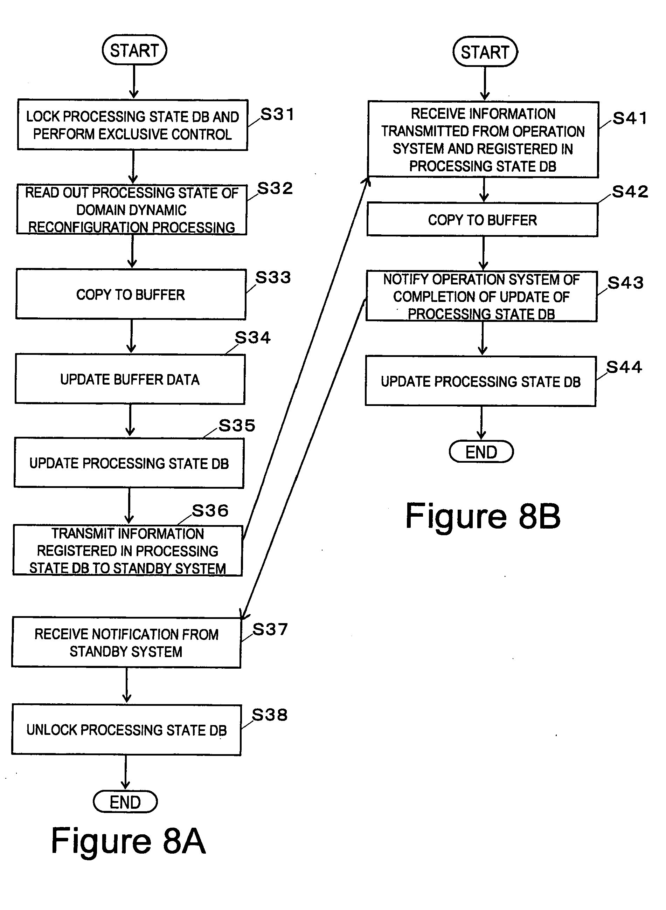

Figure 8A and8B are flowcharts illustrating processing for synchronizing the processing state DBs explained with reference to steps S22 and S25 in Figure 7. Figure 8A indicates operation processing of the operation system. Figure 8B indicates operation processing of the standby system. When the service processor as the operation system executes domain dynamic reconfiguration processing, as illustrated in Figure 8A, the processing-state registering unit 23 of the operation system locks the processing state DB 20 and performs exclusive control (step S31), reads out a processing state of the domain dynamic reconfiguration processing from the processing state DB 20 (step S32), and copies the read-out processing state in a not-illustrated buffer (step S33).

Next, the processing-state registering unit 23 updates buffer data (step S34). For example, the processing-state registering unit 23 updates the processing state read out and copied to the buffer with a present processing state (e.g., the start or the completion of the processing A). The processing-state registering unit 23 updates the processing state in the processing state DB 20 with the update buffer data (step S35). The processing-state transmitting and receiving unit 24 transmits the information registered in the processing state DB 20 to the standby system (step S36).

As illustrated in Figure 8B, the standby system receives the information transmitted from the operation system and registered in the processing state DB 20 (step S41) and copies the information to a not-illustrated buffer (step S42). The processing-state transmitting and receiving unit 24 of the standby system notifies the operation system of the completion of the update of the processing state DB 20 (step S43). The processing-state registering unit 23 of the operation system updates the processing state DB 20 in the service processor with the information copied to the buffer in step S42 (step S44).

On the other hand, when the operation system receives the notification from the processing-state transmitting and receiving unit 24 of the standby system in step S43 (step S37), the processing-state registering unit 23 of the operation system unlocks the processing state DB 20 (step S38) and ends the processing.

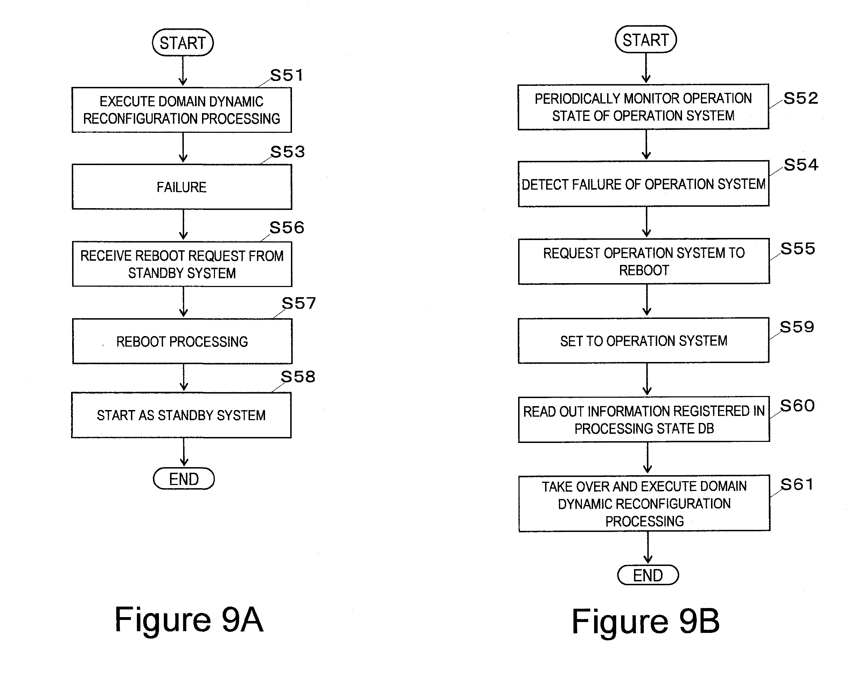

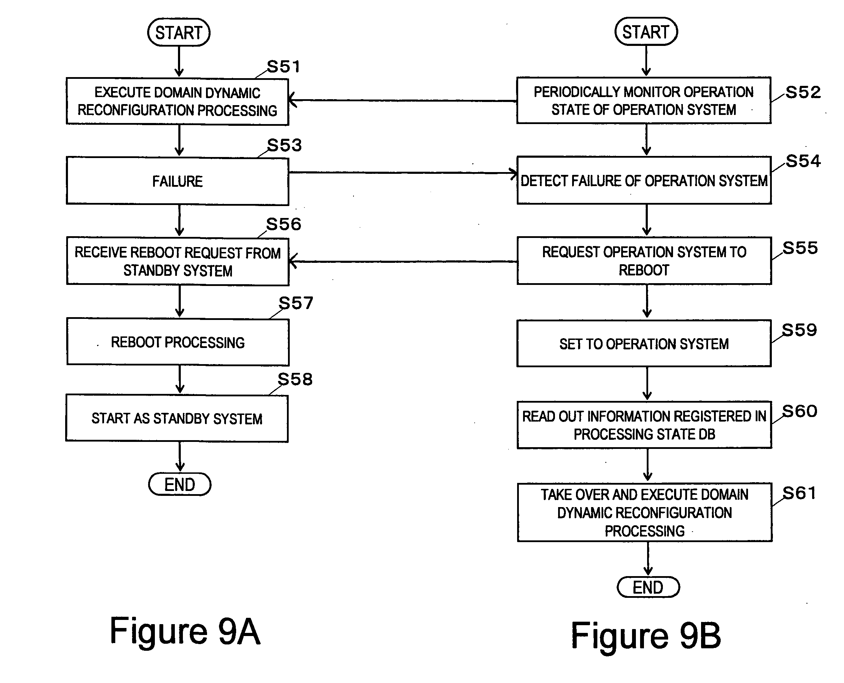

Figure 9A and 9B are diagrams illustrating an example of a processing flow for switching the operation system and the standby system. Figure 9A indicates operation processing of the operation system. Figure 9B indicates operation processing of the standby system. While the operation system executes domain dynamic reconfiguration processing (step S51), the standby system periodically monitors an operation state of the operation system (step S52). When the operation system fails (step S53), the standby system detects the failure of the operation system (step S54) and sends a reboot request to the operation system (step S55). The reboot request is a request for instructing the operation system to perform restart and switch to the standby system.

The operation system receives the reboot request from the standby system (step S56) and performs reboot processing (step S57). When the reboot processing cannot be performed, the operation system stops the operation of the service processor. After the processing in step S57, the operation system starts as the standby system (step S58).

After sending the reboot request to the operation system in step S55, the standby system switches the service processor to the operation system to thereby be set to the operation system (step S59). The standby system reads out the information registered in the processing state DB 20 of the service processor and takes over and executes the domain dynamic reconfiguration processing executed by the failed operation system (step S61).

In step S61, the promoted operation system does not take over the processing when a processing state is not registered in the processing state DB 20. For example, when the start of the processing A is registered in the processing state DB 20, the promoted operation system determines that the processing A is suspended before the start of the processing A or during the execution and executes the processing A from the start again.

For example, when the completion of the processing A is registered in the processing state DB 20, the promoted operation system determines that the execution of the processing A is completed and suspended before shifting to the next processing of the processing A and executes the next processing of the processing A.

### Industrial Applicability

With the information processing apparatus and the domain dynamic reconfiguration processing method according to the present invention, when one of the pair of service processors included in the information processing apparatus fails while the service processor executes domain dynamic reconfiguration processing, the other service processor can take over and execute the domain dynamic reconfiguration processing under execution. Therefore, according to the present invention, it is possible to carry out replacement of a system board and replacement of a failed service processor or the like in a state in which the OS is operating. As a result, it is possible to substantially improve operation time of the entire system.

## Claims

1. An information processing apparatus comprising:
a domain configured by plural system boards; and
a pair of service processors,
wherein when one of the pair of service processors fails during the execution of domain dynamic reconfiguration processing for the domain, the other of the pair of service processors takes over and executes the domain dynamic reconfiguration processing under execution.

2. The information processing apparatus according to claim 1, wherein each of the pair of service processors comprising:
a storing unit in which a processing state of domain dynamic reconfiguration processing is stored;
a domain dynamic reconfiguration processing executing unit which executes the domain dynamic reconfiguration processing while referring to the processing state of the domain dynamic reconfiguration processing stored in the storing means; and
a processing state synchronization processing unit which stores the processing state of the domain dynamic reconfiguration processing in the storing unit in synchronization with a processing state of domain dynamic reconfiguration processing executed by the other service processor.

3. The information processing apparatus according to claim 2, wherein
one of the pair of service processors is an operation system that is in an operation state and the other is a standby system that is in a standby state while the operation system is in the operation state,
each of the pair of service processors includes an operation-system and standby-system switching unit which switches, when the service processor is the standby system and the operation system fails during the execution of the domain dynamic reconfiguration processing, the service processor from the standby system to the operation system, and
the domain dynamic reconfiguration processing executing unit included in the service processor switched to the operation system takes over and executes the domain dynamic reconfiguration processing executed by the failed operation system with reference to the processing state of the domain dynamic reconfiguration processing stored in the storing unit.

4. The information processing apparatus according to claim 2, wherein the processing state synchronization processing unit stores, every time processing included in a processing state of the domain dynamic reconfiguration processing is started or completed, the processing state in the storing unit in synchronization with a processing state of the domain dynamic reconfiguration processing executed by the other service processor.

5. The information processing apparatus according to claim 1, wherein the domain dynamic reconfiguration processing is processing for separating any one of the plural system boards from the domain or processing for incorporating other system boards different from the plural system boards in the domain.

6. A domain dynamic reconfiguration processing method executed in an information processing apparatus including a domain configured by plural system boards and a pair of service processors, wherein
when one of the pair of service processors fails during the execution of domain dynamic reconfiguration processing for the domain, the other of the pair of service processors takes over and executes the domain dynamic reconfiguration processing under execution.

7. The domain dynamic reconfiguration processing method according to claim 6, wherein
one of the pair of service processors is an operation system that is in an operation state and the other is a standby system that is in a standby state while the operation system is in the operation state,
the operation system stores a processing state of the domain dynamic reconfiguration processing executed by the service processor in storing means, and
the standby system stores, every time the processing state of the domain dynamic reconfiguration processing stored in the storing means included in the operation system is updated, the processing state of the domain dynamic reconfiguration processing stored by the operation system in storing means in the service processor.

8. The domain dynamic reconfiguration processing method according to claim 7, wherein
when the operation system fails during the execution of the domain dynamic reconfiguration processing, the standby system switches the service processor from the standby system to the operation system, and
the service processor switched to the operation system takes over and executes the domain dynamic reconfiguration processing executed by the failed operation system with reference to the processing state of the domain dynamic reconfiguration processing stored in the storing means in the service processor.

9. The domain dynamic reconfiguration processing method according to claim 7, wherein the operation system stores, every time processing included in the domain dynamic reconfiguration processing is started or completed, a processing state of the domain dynamic reconfiguration processing executed by the service processor in the storing means included in the service processor.

10. The domain dynamic reconfiguration processing method according to claim 6, wherein the domain dynamic reconfiguration processing is processing for separating any one of the plural system boards from the domain or processing for incorporating other system boards different from the plural system boards in the domain.
